# EUROPEAN PATENT APPLICATION

(11) **EP 4 488 973 A1**
(43) Date of publication of application: **08.01.2025**
(21) Application number: 24182805.2
(22) Date of filing: 18.06.2024
(51) Int. Cl.: G07F 13/02, G07F 15/00

(54) **SYSTEM FOR SELF-SERVICE ENERGY REFILLING**

(30) Priority: 07.07.2023 TW 112125533; 18.08.2023 TW 112131171
(71) Applicant: Shan-Loong Transportation Co., Ltd, New Taipei City 220 (TW)
(72) Inventor: Van, David, 220 New Taipei City (TW)
(74) Representative: Straus, Alexander

(57) **Abstract**

A system for self-service energy refilling has an image recognition device acquiring and transmitting vehicle entrance information of a vehicle, a mobile device processing and transmitting transaction information, a terminal computer device receiving and transmitting the vehicle entrance information from the image recognition device, a cloud server device, and an energy refilling device including an energy refilling nozzle. The cloud server device receives the transaction information from the mobile device and the vehicle entrance information from the terminal computer device, thereby validating the mobile device and the vehicle to generate and transmit an energy refilling instruction. The energy refilling device receives the energy refilling instruction from the cloud server device or the vehicle entrance information from the image recognition device to unlock the energy refilling nozzle. The system can overcome the problems of self-service refilling machine in the art which is not consumer-friendly and lacks payment security.

## Description

### Field of the Invention

The present disclosure relates to a system for self-service energy refilling, and more particularly, to a system for self-service energy refilling via a mobile device or an energy refilling device.

### Background of the Invention

Currently, the main sources of energy for vehicle operation and propulsion include petroleum, hydrogen and electricity. Therefore, energy stations, such as gas stations, hydrogen stations and electric vehicle charging stations, are commonly being installed in urban areas as a supplement for energy refilling.

In recent years, an increase in the proportion of consumers prefers to use a self-service refilling service at the energy station. The self-service refilling service offers the consumers a discount, which is cheaper than that of a full-service refilling service; and the improper operations by station attendant leading to accidental damage of the car by the fueling nozzle may be avoided. Specifically, consumers may operate an additional self-service refilling machine next to an energy refilling pump to serve themselves; therefore, the customers can save time by not having to wait for the station attendant.

However, the construction cost of the aforementioned self-service refilling machine is high, and the maintenance cost of the machines may increase the operational costs of the energy stations. Furthermore, the self-service refilling machine needs to be updated and adjusted constantly in response to a variety of payment methods available to the consumers nowadays. Consequently, multiple payment terminals may be installed additionally, which increases the cost on machine construction and maintenance. In addition, some self-service refilling machines are not consumer-friendly and lack of payment security, causing inconvenience during operation and security issues. For example, additional time is needed for drivers to log in their membership accounts via the machine at the energy stations with membership systems, making the current payment operation unfriendly and time-consuming.

In view of the foregoing, there is an unmet need to provide a self-service energy refilling system to overcome the drawbacks faced by existing prior art.

### Summary of the Invention

Other aspects of the present disclosure will be set forth in the description which follows, and in part will be obvious to one of ordinary skill in the art after perusing the following content. One of ordinary skill in the art may also conceive the content thereof from the implementation of the present disclosure. The advantages disclosed herein may be realized and obtained as particularly pointed out in the appended claims.

To solve the aforementioned problems, the present disclosure provides a system for self-service energy refilling, including: an image recognition device disposed at a driveway of an energy station, and configured to acquire and transmit a vehicle entrance information of a vehicle parked in the driveway; a mobile device including an application configured to process and transmit a transaction information; a terminal computer device, configured to receive the vehicle entrance information from the image recognition device and transmit the vehicle entrance information; a cloud server device, configured to: receive the transaction information from the mobile device and the vehicle entrance information from the terminal computer device; validate the mobile device and the vehicle according to the transaction information and the vehicle entrance information to generate an energy refilling instruction; and transmit the energy refilling instruction; and an energy refilling device, including an energy refilling nozzle and configured to receive the energy refilling instruction from the cloud server device or the vehicle entrance information from the image recognition device to unlock the energy refilling nozzle.

In summary, the system for self-service energy refilling of the present disclosure not only addresses the issues in prior art, but also provides the following features and effects in certain embodiments:
(a) The convenience and time savings that the self-service energy refilling system of the present disclosure offers may allow the user to operate the self-service energy refilling system via the application installed in the mobile phone or the consumer-friendly energy refilling device of the present disclosure, and not have to operate the conventional self-service energy refilling machine.
(b) The high correctness and high security of the self-service energy refilling system of the present disclosure are achieved by allowing the user to select the payment method via the application installed in the mobile phone, and providing an authentication process of the transaction information and the vehicle entrance information of the user.
(c) The cloud server device of the present disclosure may remain the transaction information and the vehicle entrance information of the user temporary in order to provide a high security self-service energy refilling system preventing the restricted data breach.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a system for self-service energy refilling in accordance to embodiments of the present disclosure.
FIG. 2 is a schematic diagram of details regarding a system for self-service energy refilling in accordance to embodiments of the present disclosure.
FIG. 3A is a schematic diagram of a system for self-service energy refilling in accordance to embodiments of the present disclosure.
FIG. 3B is a schematic diagram of an energy refilling device in accordance to embodiments of the present disclosure.
FIG. 4A to FIG. 4D are flowcharts of a system for self-service energy refilling in accordance to embodiments of the present disclosure.
FIG. 5 is a schematic diagram of a password input interface displayed by a second display unit of an energy refilling device in accordance to embodiments of the present disclosure.
FIG. 6 is a schematic diagram of a transaction receipt displayed by a second display unit of an energy refilling device in accordance to embodiments of the present disclosure.
FIG. 7 is a flowchart of selecting an energy refilling means of a system for self-service energy refilling in accordance to embodiments of the present disclosure.
FIG. 8A and FIG. 8B are schematic diagrams of an energy refilling means selection interface displayed by a second display unit of an energy refilling device in accordance to embodiments of the present disclosure.
FIG. 9 is a flowchart of selecting a payment method of a system for self-service energy refilling in accordance to embodiments of the present disclosure.
FIG. 10A and FIG. 10B are schematic diagrams of a payment method selection interface displayed by a second display unit of an energy refilling device in accordance to embodiments of the present disclosure.
FIG. 11 is a flowchart of selecting a receipt type of a system for self-service energy refilling in accordance to embodiments of the present disclosure.
FIG. 12 is schematic diagram of a receipt type selection interface displayed by a second display unit of an energy refilling device in accordance to embodiments of the present disclosure.

### Detailed Description

The following descriptions of the embodiments illustrate implementations of the present disclosure, and those skilled in the art of the present disclosure can readily understand the advantages and effects of the present disclosure in accordance with the contents herein. However, the embodiments of the present disclosure are not intended to limit the scope of the present disclosure. The present disclosure can be practiced or applied by other alternative embodiments, and every detail included in the present disclosure can be changed or modified in accordance with different aspects and applications without departing from the essentiality of the present disclosure.

The features such as a ratio, structure, and dimension shown in drawings accompanied with the present disclosure are simply used to cooperate with the contents disclosed herein for those skilled in the art to read and understand the present disclosure, rather than to limit the scope of implementation of the present disclosure. Thus, in the case that does not affect the purpose of the present disclosure and the effect brought by the present disclosure, any change in proportional relationships, structural modification, or dimensional adjustment should fall within the scope of the technical contents disclosed herein.

As used herein, "comprising" and any variant or conjugation thereof, such as "comprise" or "comprises;" "including" and any variant or conjugation thereof, such as "include" or "includes;" or "having" and any variant or conjugation thereof, such as "have" or "has" a specific element, unless otherwise specified, may include other elements such as components, structures, units, portions, devices, systems, steps, connection, module, or unit relationships rather than exclude those elements.

The terms "first," "second," "third," "fourth," et cetera, used herein are simply used to describe or distinguish elements such as components, structures, units, portions, devices, or systems, rather than used to limit the scope of implementation of the present disclosure or to limit the spatial order of the elements. In addition, unless otherwise specified, the singular forms "a" and "the" used herein also include plural forms, and the terms "or" and "and/or" used herein are interchangeable.

The numeral ranges used herein are inclusive and combinable, and any numeral value that falls within the numeral scope herein can be taken as a maximum or minimum value to derive the sub-ranges therefrom. For example, it should be understood that the numeral range from "5 minutes to 20 minutes" includes any sub-ranges between the minimum value of 5 minutes and the maximum value of 20 minutes, such as the sub-ranges from 7 minutes to 15 minutes, from 16 minutes to 18 minutes, and from 15 minutes to 20 minutes.

The terms "user," "consumer" and "driver" used herein are interchangeable.

The terms "authentication," "verification," and "validation," used herein are interchangeable and used to describe the verification of the message, data, and/or instruction. The terms "data authentication," "instruction authentication," "data verification," or "instruction verification" may be used under the circumstance of confirming the message, data, or instruction.

The term "energy refilling procedure information" used herein refers to a vehicle entrance information and/or transaction information, including a user license plate number, a station name of the energy station, a driveway number of the driveway, an entrance time of the vehicle, a desired energy type of the energy, a selected payment method, or a selected receipt type of which the present disclosure is not limited thereto.

The term "encryption/decryption" used herein refers to the processes of encrypting or decrypting of information and/or instruction of which the present disclosure is not limited thereto.

The term "mobile device" used herein may be, but not limited to, a smart phone having a camera lens, a tablet having a camera lens, a notepad having a camera lens, or a wearable electronic device having a camera lens.

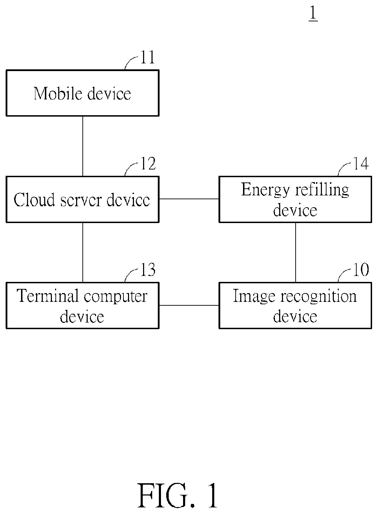

FIG. 1 shows a schematic diagram of a system for self-service energy refilling 1 according to at least one embodiment of the present disclosure, including an image recognition device 10, a mobile device 11, a cloud server device 12, a terminal computer device 13, and an energy refilling device 14. It should be noted that the quantity and connection of each of the devices are exemplary and can be increased, decreased, or altered according to actual needs.

In some embodiments, the image recognition device 10 is configured to acquire and transmit vehicle entrance information to the cloud server device 12 through the terminal computer device 13 for storage. The vehicle entrance information may be used in the self-service energy refilling procedure or to create a self-service energy refilling membership file of a user subsequently. The image recognition device 10 may be, but not limited to, a camera or a monitor.

In some embodiments, the mobile device 11 is configured to receive and process transaction information for self-service energy refilling procedure validation or creating a self-service refilling energy membership file of the user subsequently. The mobile device 11 may be, but not limited to, a smartphone with a camera, a tablet with a camera, a laptop with a camera, or a wearable electronic device with a camera. In some embodiments, the mobile device 11 may be installed an application (APP) corresponding to the system for self-service energy refilling 1 of the present disclosure, and the transaction information may be stored in a two-dimensional barcode, such as a quick response code (QR code). Therefore, the user may provide the QR code generated by the APP presenting on the mobile device 11 for the energy refilling device 14. In other embodiments, the user may scan the QR code generated by the energy refilling device 14 by the mobile device 11 for receiving and processing the transaction information.

In some embodiments, the cloud server device 12 is configured to receive and process transaction information from the mobile device 11 and a vehicle entrance information from the terminal computer device 13 for verifying and storing the transaction information and the vehicle entrance information, and then generating an energy refilling instructions for self-service energy refilling procedure subsequently. The vehicle entrance information from the terminal computer device 13 is received from the image recognition device 10. In some embodiments, the cloud server device 12 further includes a database for storing the transaction information and the vehicle entrance information, in order to create a self-service energy refilling energy membership file of the user. The database may be, but not limited to, any suitable data storage device, system, database, cloud storage space, or the like.

In some embodiments, the terminal computer device 13 is configured to receive vehicle entrance information from the image recognition device 10 and transmit the vehicle entrance information to the cloud server device 12 for the self-service energy refilling procedure subsequently.

In some embodiments, the energy refilling device 14 is configured to receive the energy refilling instruction from the cloud server device 12 to unlock the energy refilling nozzle 142 for the self-service energy refilling.

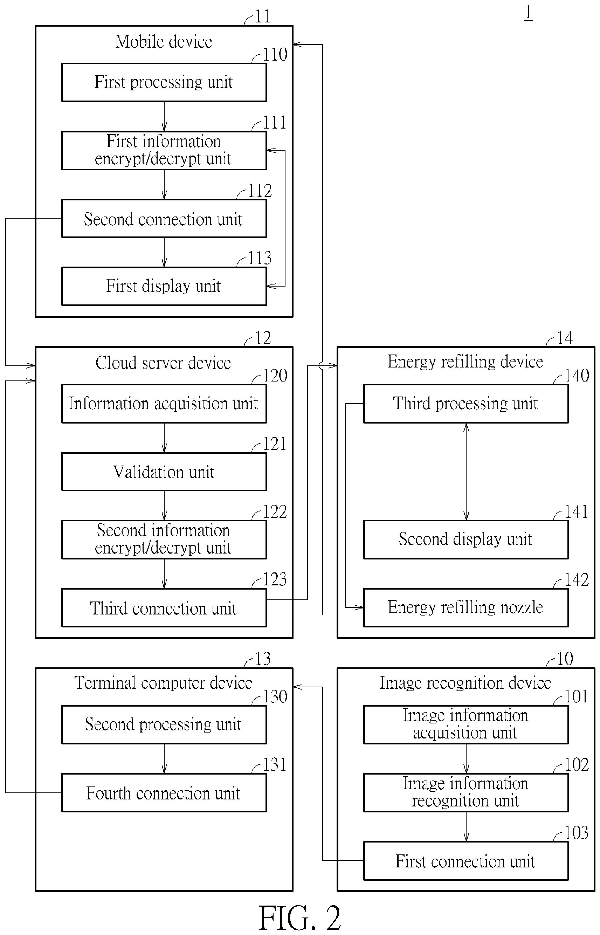

FIG. 2 shows the connection between the components of the system for self-service energy refilling 1 in at least one of the embodiments of the present disclosure, which indicated by arrows, and the internal elements of each component.

In some embodiments, the image recognition device 10 includes an image information acquisition unit 101, an image information recognition unit 102, and a first connection unit 103. In some embodiments, the image information acquisition unit 101 may be, but not limited to, a lens of a camera or a lens of a security camera, used to acquire the vehicle entrance information, including a user license plate number, a station name of an energy station, a driveway number of the driveway, and an entrance time of the vehicle, and transmit the vehicle entrance information to the image information recognition unit 102. The image information recognition unit 102 may be, but not limited to, a processor, configured to identify the user license plate number, the station name of the energy station, the driveway number of the driveway, and the entrance time of the vehicle, and transmit the vehicle entrance information to the first connection unit 103. The first connection unit 103 provides an internet connection between the image recognition device 10 and the terminal computer device 13 for transmitting the vehicle entrance information.

In some embodiments, the mobile device 11 includes a first processing unit 110, a first information encrypt/decrypt unit 111, a second connection unit 112, and a first display unit 113.

In some embodiments, the first processing unit 110 may be a lens of the mobile device 11, configured to scan the QR code on the energy refilling device 14 for acquiring the transaction information and transmitting the transaction information to the first information encrypt/decrypt unit 111; the first information encrypt/decrypt unit 111 is configured to perform an encryption or a decryption of the transaction information, that is, a user information, a desired energy type of the energy, a selected payment method, or a selected receipt type; the second connection unit 112 is configured to provide internet connection to perform transmission of the transaction information to the cloud server device 12; and the first display unit 113 is configured to display the acquired transaction information for allowing the users in confirming the transaction information, and to display the subsequent self-service refilling procedure.

In some other embodiments, the first processing unit 110 may be, but not limited to, a processor configured to acquire the transaction information from the cloud server device 12. The cloud server device 12 may provide a QR code to the application installed in the mobile device 11, for example, the user sends an energy refilling request and the transaction information via the application of the present disclosure installed in the mobile device 11, by triggering the "quick energy refilling" command button on the user interface of the application in order to send the energy refilling request and the transaction information to the cloud server device 12. The cloud server device 12 then generates a hashed key by a hashing algorithm and sends the hashed key to the mobile device 11, allowing the application installed in the mobile device 11 to generate a QR code for storing the transaction information and providing the QR code to the energy refilling device 14 for scanning, and enabling the cloud server device 12 to receive the transaction information for self-service energy refilling procedure subsequently.

In some embodiments, the cloud server device 12 includes an information acquisition unit 120, a validation unit 121, a second information encrypt/decrypt unit 122, and a third connection unit 123.

In some embodiments, the cloud server device 12 acquires the transaction information from the mobile device 11 and the vehicle entrance information from the terminal computer device 13 by the information acquisition unit 120; the validation unit 121 verifies the transaction information from the mobile device 11 and the vehicle entrance information from the terminal computer device 13 to ensure the correctness and security of the information, after the validation, the cloud server device 12 then utilizes the second information encrypt/decrypt unit 122 to encrypt the transaction information from the mobile device 11 and the vehicle entrance information from the terminal computer device 13; and the cloud server device 12 generates and transmits an energy refilling instruction to the energy refilling device 14 via the third connection unit 123, that is, third connection unit 123 provides the internet connection between the cloud server device 12 and the energy refilling device 14 for transmitting the energy refilling instruction for self-service energy refilling procedure subsequently.

In some other embodiments, (1) the cloud server device 12 receives the energy refilling request from the mobile device 11 and the transaction information from the vehicle entrance information from the terminal computer device 13 via the information acquisition unit 120, that is, as previously described, the user sends the energy refilling request and the transaction information via the application of the present disclosure installed in the mobile device 11, by triggering the "quick energy refilling" command button on the user interface of the application in order to send the information to the cloud server device 12, and the image recognition device 10 transmits the vehicle entrance information to the cloud server device 12 via the terminal computer device 13; (2) the cloud server device 12 verifies the correctness and the security of the transaction information and the vehicle entrance information by the validation unit 121, and stores the transaction information and the vehicle entrance information into a hash table structure to create a key-value table of the user transaction data, specifically, the user information is hashed to generate a hashed key by the hashing algorithm as an index, and the desired energy type of the energy, the selected payment method, the selected receipt type, the user license plate number, the station name of the energy station, the driveway number of the driveway, and the entrance time of the vehicle are temporarily stored in a bucket corresponding to the hashed key and will be removed after a set period of time to ensure the information security; (3) the cloud server device 12 encrypts the generated hashed keys by the second information encrypt/decrypt unit 122 and transmits the encrypted hashed keys to the mobile device 11 through the third connection unit 123, allowing the application to generate a QR code; and (4) the user presents the QR code to the energy refilling device 14 for scanning, allowing the cloud server device 12 to receive the encrypted hashed keys and to verify the hashed keys by decrypting the hashed key via the second information encrypt/decrypt unit 122, and to compare the decrypted hashed key with that of the bucket, for ensuring the decrypted hashed key has the corresponding value stored in the bucket, and if the verification is successful, extracting the transaction information, that is, the desired energy type of the energy, the selected payment method, and the selected receipt type, through the hashed key, additionally, the transaction information is compared with the vehicle entrance information, that is, the user license plate number, the station name of the energy station, the driveway number of the driveway, and the entrance time of the vehicle, to confirm that the license plate number is owned by the user and the user's vehicle is arrived at the energy station, and parked in the driveway corresponding to the energy refilling device 14, and if all conditions are met, the cloud server device 12 generates and transmits the energy refilling instruction to the energy refilling device 14 through the third connection unit 123 for self-service energy refilling procedure subsequently.

In some embodiments, the "set period of time" used herein may be set and adjusted by the energy station, such as the set period of time may be, but not limited to, 5 minutes to 20 minutes, 5 minutes to 15 minutes, 5 minutes to 10 minutes, 10 minutes to 20 minutes, 10 minutes to 15 minutes, 15 minutes to 20 minutes.

In some embodiments, the terminal computer device 13 includes a second processing unit 130 and a fourth connection unit 131. In some embodiments, the terminal computer device 13 may be, but not limited to, an industrial personal computer (IPC), and receive the vehicle entrance information from the image recognition device 10 through the second processing unit 130 and transmit the vehicle entrance information to the cloud server device 12 via the fourth connection unit 131, for self-service energy refilling procedure subsequently.

In some embodiments, the energy refilling device 14 includes a third processing unit 140, a second display unit 141, and an energy refilling nozzle 142. In some embodiments, the energy refilling device 14 receives the energy refilling instruction from the cloud server device 12 via the third processing unit 140 and unlocks the energy refilling nozzle 142 according to the energy refilling instruction, allowing the user to access the energy refilling nozzle 142 for self-service energy refilling; and the second display unit 141 displays the received energy refilling instruction for the user confirmation, and the status of the energy refilling nozzle 142 being locked or unlocked.

Each unit shown in FIG. 2 may be a software, a hardware, or a firmware; if the unit is the software or the firmware, the unit may include an instruction that can be executed by the unit, a processor, a computer, or a server; and if the unit is the hardware, the unit may be a module, the processor, the computer, or the server with the capabilities to perform data processing and computing.

In some embodiments, the components of the system for self-service energy refilling 1 of the present disclosure may be, but not limited to be, implemented individually as any suitable computing device, equipment, application, system, or the like. For example, any two or three of the information acquisition unit 120, the validation unit 121, the second information encrypt/decrypt unit 122, and the third connection unit 123 of the cloud server device 12 may be integrated together instead of being implemented as four separate units. However, the configuration of the components in the system for self-service energy refilling 1 of the present disclosure can be realized in any suitable form without departing from the operational principles of the present disclosure, and should not be limited to the scope of present disclosure.

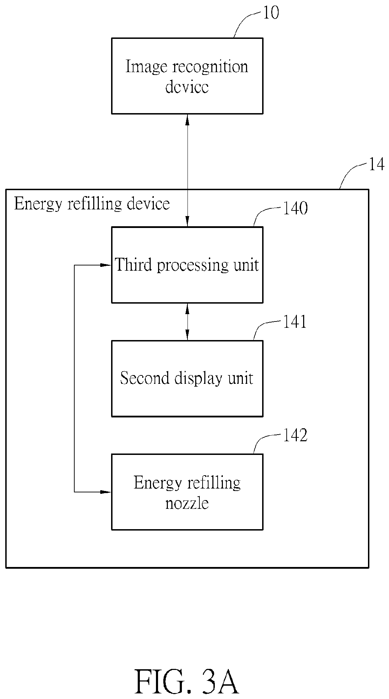

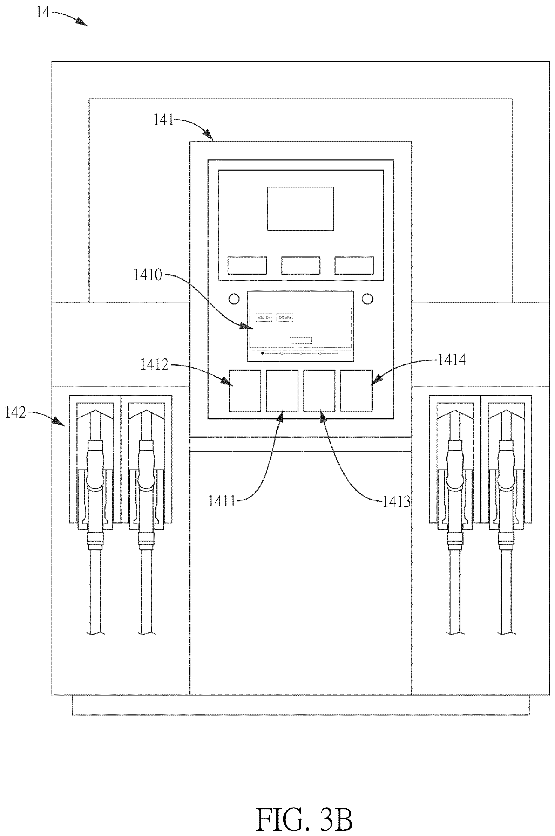

As shown in FIG. 3A and FIG. 3B, a system for self-service energy refilling 1 of the present disclosure includes an image recognition device 10 and an energy refilling device 14. The image recognition device 10 is disposed at a driveway of an energy station, and is configured to acquire vehicle entrance information of a vehicle, for example, a user license plate number, parked in the driveway.

In some embodiments, the energy refilling device 14 includes a third processing unit 140, a second display unit 141, and an energy refilling nozzle 142. In some embodiments, the third processing unit 140 is electrically connected to the image recognition device 10 for receiving the vehicle entrance information, for example, a user license plate number, and the third processing unit 140 is electrically connected to the second display unit 141 and the energy refilling nozzle 142.

In some embodiments, the second display unit 141 includes a touch screen 1410, a barcode scanner 1411, a card reader 1412, a contactless payment machine 1413, and a paper output port 1414. In some embodiments, the touch screen 1410 displays a guidance interface allowing the user to operate the touch screen 1410 directly according to the guidance interface, and the touch screen 1410 has a speaker for guiding the user to operate the touch screen 1410 by the voice. In some embodiments, the barcode scanner 1411 is configured to scan the barcode provided by the user, for example, a carrier barcode or a payment barcode. In some embodiments, the card reader 1412 is configured to read a credit card provided by the user; and the contactless payment machine 1413 is configured to be tapped by the payment device provided by the user, for example a smartphone with mobile payment functionality, or a credit card or a card with contactless payment functionality. In some embodiments, the paper output port 1414 is configured to output a printed paper receipt or a transaction receipt.

In some embodiments, the energy refilling nozzle 142 may be, but not limited to, a fuel gun, a hydrogen gun, or an electric vehicle charging nozzle, configured to provide petroleum, hydrogen, or electricity as energy for the vehicle.

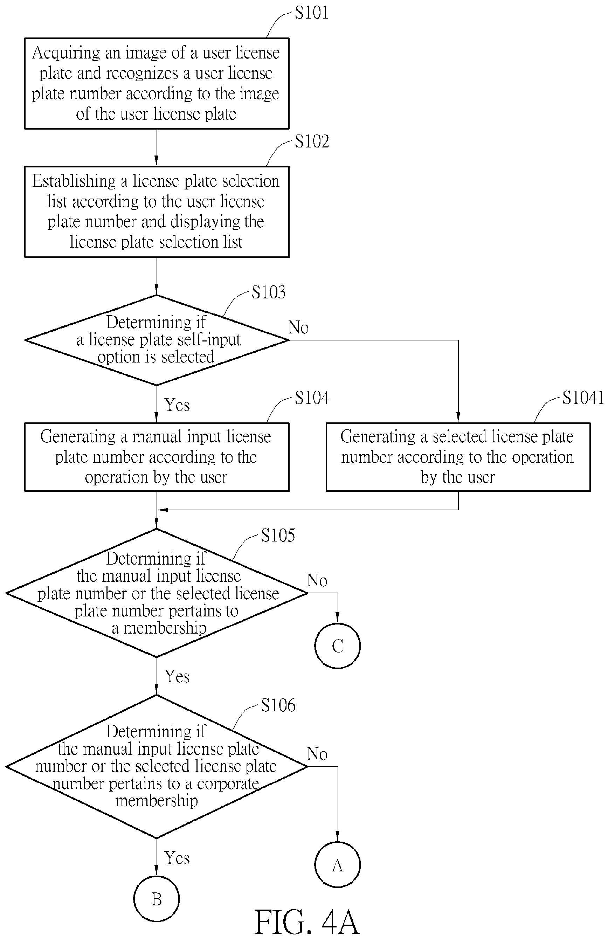

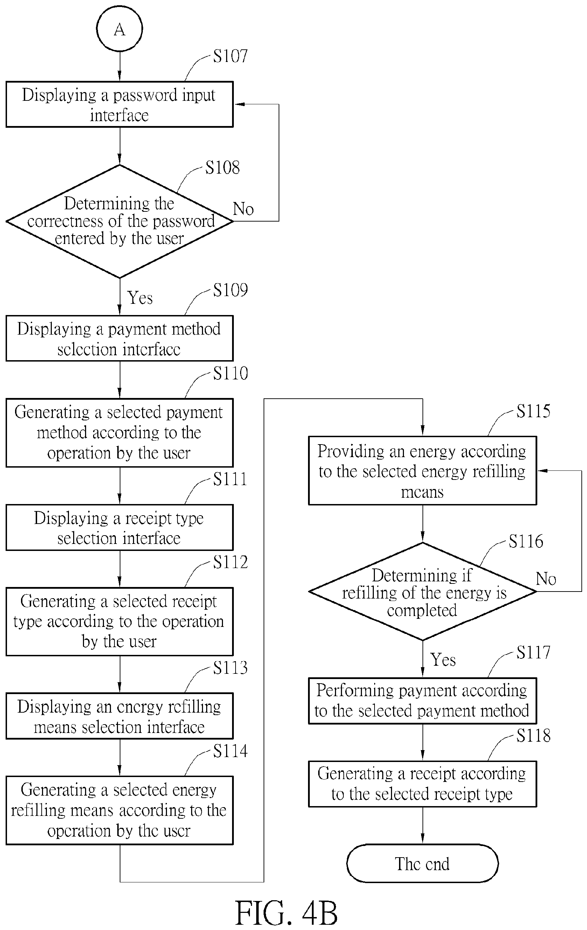

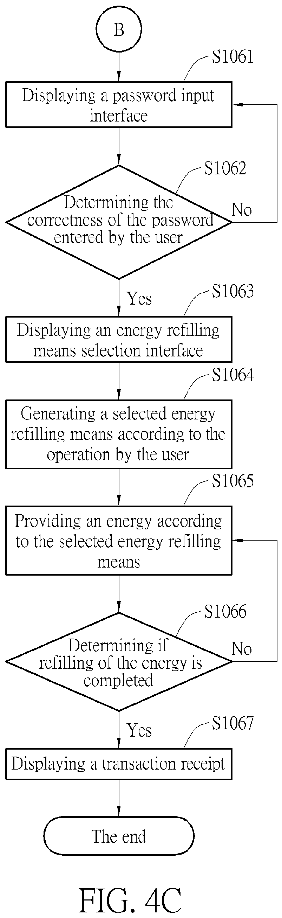

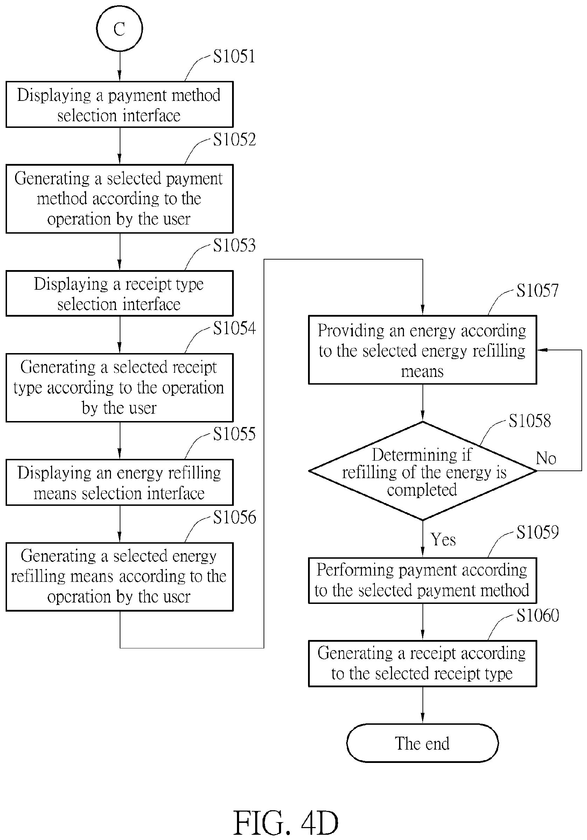

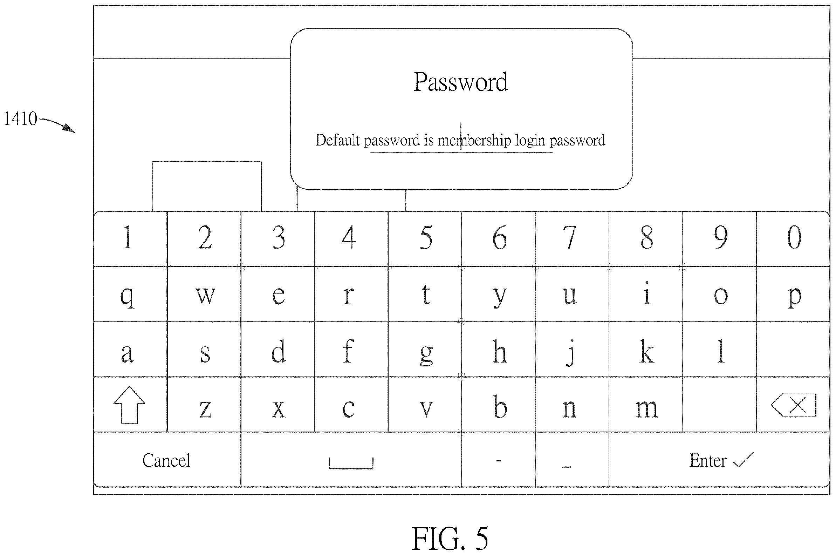

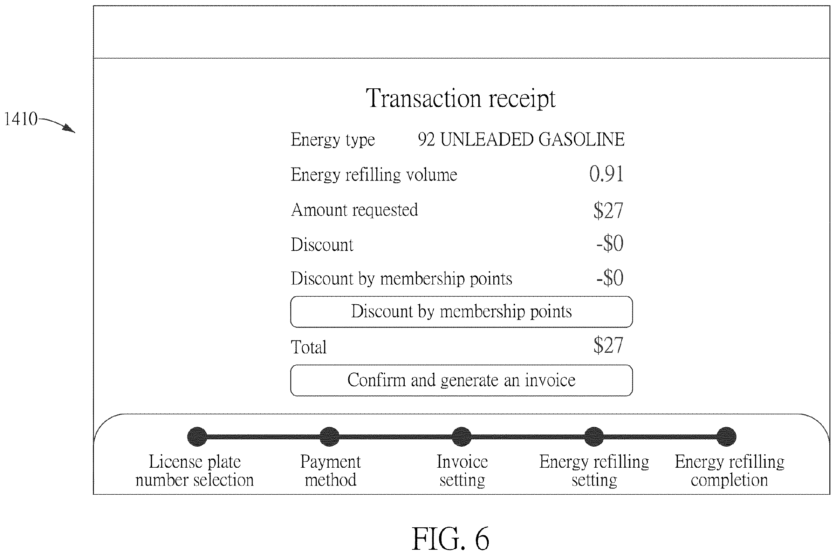

As shown in FIG. 4A to FIG. 4D, an image recognition device 10 and an energy refilling device 14 of a system for self-service energy refilling 1 are configured to execute the following steps:
Step 101 (S101): The image recognition device 10 acquires an image of a user license plate of a vehicle parked in the driveway, and if the image of the user license plate is received from the third processing unit 140, the third processing unit 140 recognizes a user license plate number according to the image.
Step 102 (S102): The third processing unit 140 establishes a license plate selection list according to the user license plate number and controls the second display unit 141 to display the license plate selection list.
Step 103 (S103): The third processing unit 140 determines if a license plate self-input option of the license plate selection list is selected.
Step 104 (S104): If the license plate self-input option is selected, the third processing unit 140 receives a manual input license plate number generated by the second display unit 141, and determines if the manual input license plate number pertains to a membership (Step 105 (S105)). In some embodiments, the user operates the touch screen 1410 of the second display unit 141 to generate the manual input license plate number.
Step 1041 (S1041): If the license plate self-input option is not selected, the third processing unit 140 receives a selected license plate number generated by the second display unit 141, and determines if the selected license plate number pertains to a membership (Step 105 (S105)). In some embodiments, the user operates the touch screen 1410 of the second display unit 141 to generate the selected license plate number.
Step 1051 (S1051): If the manual input license plate number or the selected license plate number does not pertain to a membership, the third processing unit 140 controls the second display unit 141 to display a payment method selection interface directly.
Step 1052 (S1052): The third processing unit 140 receives the selected payment method generated by the second display unit 141. In some embodiments, the user operates the touch screen 1410 of the second display unit 141 to generate the selected payment method, that is, the user operates the touch screen 1410 of the second display unit 141 directly to select the selected payment method manually.
Step 1053 (S1053): The third processing unit 140 controls the second display unit 141 to display a receipt type selection interface.
Step 1054 (S1054): The third processing unit 140 receives the selected receipt type generated by the second display unit 141. In some embodiments, the user operates the touch screen 1410 of the second display unit 141 to generate the selected receipt type, that is, the user operates the touch screen 1410 of the second display unit 141 directly to select the selected receipt type manually.
Step 1055 (S1055): The third processing unit 140 controls the second display unit 141 to display an energy refilling means selection interface.
Step 1056 (S1056): The third processing unit 140 receives a selected energy refilling means generated by the second display unit 141. In some embodiments, the user operates the touch screen 1410 of the second display unit 141 to generate the selected energy refilling means, that is, the user operates the touch screen 1410 of the second display unit 141 directly to select the selected energy refilling means manually.
Step 1057 (S1057): The third processing unit 140 controls the energy refilling nozzle 142 to provide the energy according to the selected energy refilling means.
Step 1058 (S1058): The third processing unit 140 determines if the refilling of the energy is completed.
Step 1059 (S1059): The third processing unit 140 performs payment according to the selected payment method if refilling of the energy is completed.
Step 1060 (S1060): The third processing unit 140 generates a receipt according to the selected receipt type. In some embodiments, if the user does not apply for a membership of the energy station, the user may perform the payment directly, that is, if the manual input license plate number or the selected license plate number does not pertain to a membership, the payment method selection interface is displayed directly allowing the user to operate the second display unit 141 for selecting the payment method and preventing unnecessary operation, in order to increase the operation efficiency.
Step 106 (S106): If the manual input license plate number or the selected license plate number pertains to the membership, the third processing unit 140 determines if the manual input license plate number or the selected license plate number pertains to a corporate membership.
Step 1061 (S1061): if the manual input license plate number or the selected license plate number pertains to the corporate membership, the third processing unit 140 controls the second display unit 141 to display a password input interface. As shown in FIG. 5, the password input interface allows the user to enter the password manually.
Step 1062 (S1062): The third processing unit 140 receives the user password generated by the second display unit 141, and determines the correctness of the user password according to the selected license plate number. In some embodiments, the user operates the touch screen 1410 of the second display unit 141 to generate the user password, that is, the user operates the touch screen 1410 of the second display unit 141 directly to select the user password manually.
Step 1063 (S1063): If the manual input license plate number or the selected license plate number pertains to the corporate membership and the user password is correct, the third processing unit 140 controls the second display unit 141 to display the energy refilling means selection interface; and if the user password is not correct, the third processing unit 140 controls the second display unit 141 to display the password input interface (Step 1061 (S1061)).
Step 1064 (S1064): The third processing unit 140 receives the selected energy refilling means generated by the second display unit 141.
Step 1065 (S1065): The third processing unit 140 controls the energy refilling nozzle 142 to provide the energy according to the selected energy refilling means.
Step 1066 (S1066): The third processing unit 140 determines if refilling of the energy is completed.
Step 1067 (S1067): The third processing unit 140 controls the second display unit 141 to display a transaction receipt when refilling of the energy is completed. As shown in FIG. 6, in some embodiments, the transaction receipt includes an energy type, an energy refilling volume, an amount requested, a discount, and a discount by membership points.

In some embodiments, since the user with the corporate membership performs the payment directly to the energy station, the user does not need to perform the payment, that is, if the manual input license plate number or the selected license plate number pertains to the corporate membership, the password input interface is displayed directly allowing the user to operate the second display unit 141 to enter the user password and preventing unnecessary operation in order to increase the operation efficiency; moreover, since the user needs to enter the user password to proceed the subsequent operations, an unauthorized user is prevented from using the vehicle of the company and the user who knows the password is able to perform the payment through the corporate membership.

Step 107 (S107): If the manual input license plate number or the selected license plate number pertains to the membership but not the corporate membership, the third processing unit 140 controls the second display unit 141 to display the password input interface.

Step 108 (S108): The third processing unit 140 receives the user password generated by the second display unit 141, and determines the correctness of the user password according to the selected license plate number.

Step 109 (S109): If the user password is correct, the third processing unit 140 controls the second display unit 141 to display a payment method selection interface; and if the user password is not correct, the third processing unit 140 controls the second display unit 141 to display the password input interface (Step 107 (S107)).

Step 110 (S110): The third processing unit 140 receives a selected payment method generated by the second display unit 141.

Step 111 (S 111): The third processing unit 140 controls the second display unit 141 to display a receipt type selection interface.

Step 112 (S112): The third processing unit 140 receives a selected receipt type generated by the second display unit 141

Step 113 (S113): The third processing unit 140 controls the second display unit 141 to display an energy refilling means selection interface.

Step 114 (S114): The third processing unit 140 receives a selected energy refilling means generated by the second display unit 141.

Step 115 (S115): The third processing unit 140 controls the energy refilling nozzle 142 to provide the energy according to the selected energy refilling means.

Step 116 (S116): The third processing unit 140 determines if refilling of the energy is completed.

Step 117 (S117): If refilling of the energy is completed, the third processing unit 140 performs payment according to the selected payment method; and if refilling of the energy is not completed, the third processing unit 140 controls the energy refilling nozzle 142 to provide the energy according to the selected energy refilling means (Step 115 (S115)).

Step 118 (S118): The third processing unit 140 generates a receipt according to the selected receipt type.

In some embodiments, since the image recognition device 10 acquires an image of a user license plate, and the third processing unit 140 of the energy refilling device 14 recognizes a user license plate number according to the image of the user license plate, allowing the user to log in the membership account without entering the user ID, providing a friendly operation environment, increasing the operation efficiency, and saving the operation time.

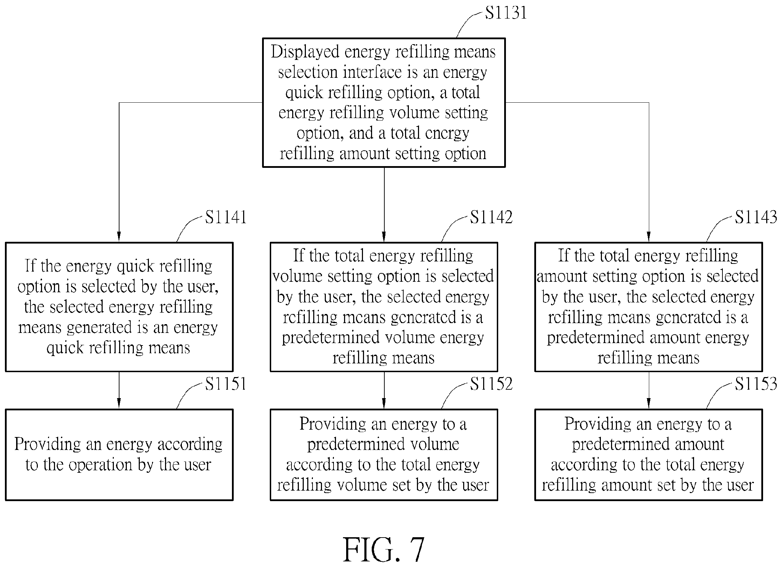

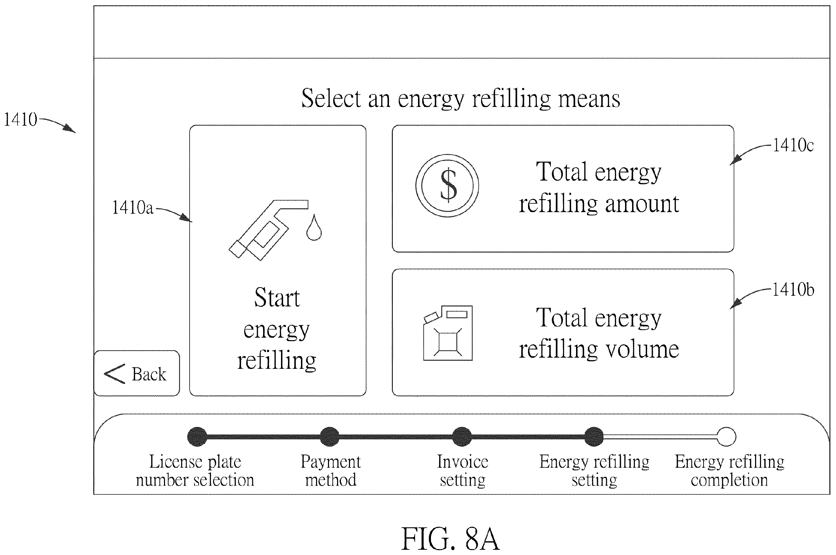

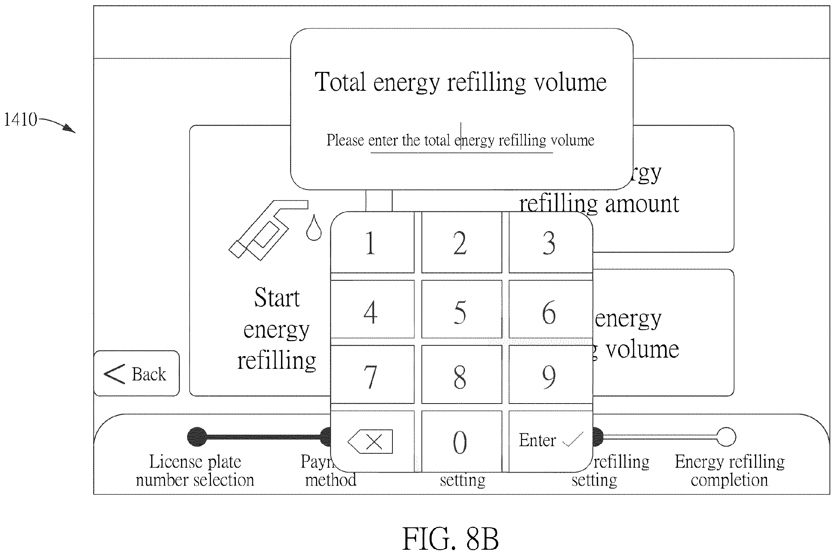

As shown in FIG. 7, FIG. 8A and FIG. 8B, an energy refilling device 14 of a system for self-service energy refilling 1 of the present disclosure are configured to further execute the following steps:
Step 1131 (S1131): The energy refilling means selection interface displayed by the second display unit 141 includes an energy quick refilling option 1410a, a total energy refilling volume setting option 1410b, and a total energy refilling amount setting option 1410c.
Step 1141 (S1141): If the energy quick refilling option 1410a is selected, the third processing unit 140 determines the selected energy refilling means generated by the second display unit 141 to set as an energy quick refilling means.
Step 1151 (S1 151): The third processing unit 140 controls the energy refilling nozzle 142 to provide the energy according to the energy quick refilling option, and determines if refilling of the energy is completed.
Step 1142 (S1142): If the total energy refilling volume setting option 1410b is selected, the third processing unit 140 determines the selected energy refilling means generated by the second display unit 141 to set as a predetermined volume energy refilling means.
Step 1152 (S1152): The third processing unit 140 controls the energy refilling nozzle 142 to provide the energy to a predetermined volume according to the total energy refilling volume setting option 1410b, and determines if refilling of the energy is completed. As shown in FIG. 8B, when providing the energy to a predetermined volume, the user selects the total energy refilling volume setting option 1410b and enters the amount of energy needed, for example, the user enters the volume of the petroleum needed.
Step 1143 (S1143): If the total energy refilling amount setting option 1140c is selected, the third processing unit 140 determines the selected energy refilling means generated by the second display unit 141 to set as a predetermined amount energy refilling means.
Step 1153 (S1153): The third processing unit 140 controls the energy refilling nozzle 142 to provide the energy to a predetermined amount according to the total energy refilling amount setting option 1410c, and determines if refilling of the energy is completed (Step 116 (S116)). In some embodiments, when providing the energy to a predetermined amount, the user selects the total energy refilling amount setting option 1410c and enters the amount of energy needed, for example, the user enters the amount of the petroleum needed.

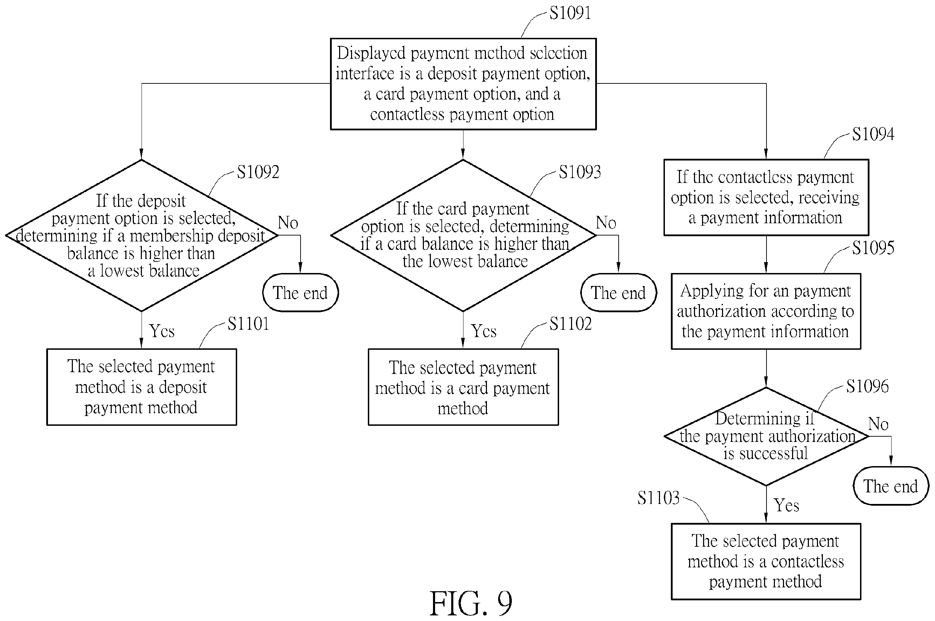

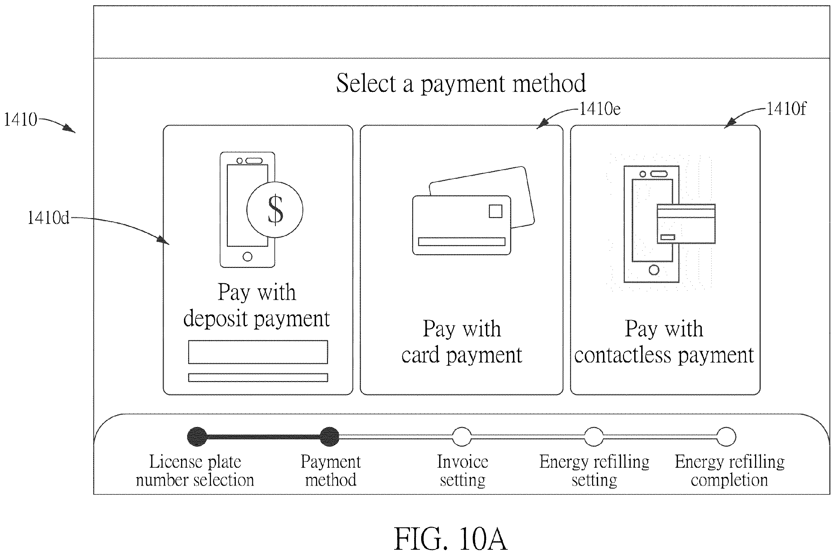

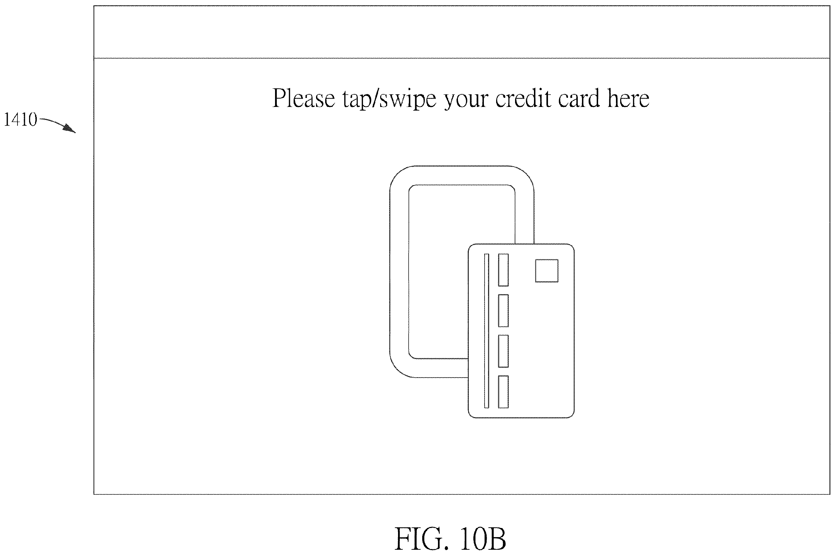

As shown in FIG. 9, FIG. 10A and FIG. 10B, an energy refilling device 14 of a system for self-service energy refilling 1 of the present disclosure are configured to further execute the following steps:
Step 1091 (S1091): The payment method selection interface displayed by the second display unit 141 includes a deposit payment option 1410d, a card payment option 1410e, and a contactless payment option 1410f.
Step 1092 (S1092): If the deposit payment option 1410d is selected, the third processing unit 140 determines if a membership deposit balance corresponding to the manual input license plate number or the selected license plate number is higher than a lowest balance.
Step 1101 (S1101): The third processing unit 140 determines the selected payment method generated by the second display unit 141 to set as a deposit payment method if the membership deposit balance is higher than the lowest balance.
Step 1093 (S1093): If the card payment option 1410e is selected, the third processing unit 140 determines if a card balance is higher than the lowest balance. In some embodiments, the card payment may be, but not limited to be, performed by a debit card or a credit card provided from the user, that is, the card payment is performed by reading the debit card or the credit card via the card reader 1412 of the second display unit 141.
Step 1102 (S1102): The third processing unit 140 determines the selected payment method generated by the second display unit 141 to set as a card payment method if the card balance is higher than the lowest balance
Step 1094 (S1094): If the contactless payment option 1410f is selected, the third processing unit 140 receives a payment information via the second display unit 141.
Step 1095 (S1095): The third processing unit 140 applies for a payment authorization according to the payment information.
Step 1096 (S1096): The third processing unit 140 determines if the payment authorization is successful.
Step 1103 (S1103): If the payment authorization is successful, the third processing unit 140 determines the selected payment method generated by the second display unit 141 is a contactless payment method. In some embodiments, as shown in FIG. 10B, When performing the contactless payment method, the user selects the contactless payment option 1410f, and then taps the credit card or the mobile payment tools of the mobile device 11 on the contactless payment machine 1413 of the second display unit 141; or uses the barcode scanner 1411 of the second display unit 141 to scan the credit card or the mobile payment tools of the mobile device 11. In some embodiments, the user applies for a payment authorization through online payment by the tapped or scanned transaction information. In some embodiments, the payment authorization applied through online payment is a typical digital financial model.

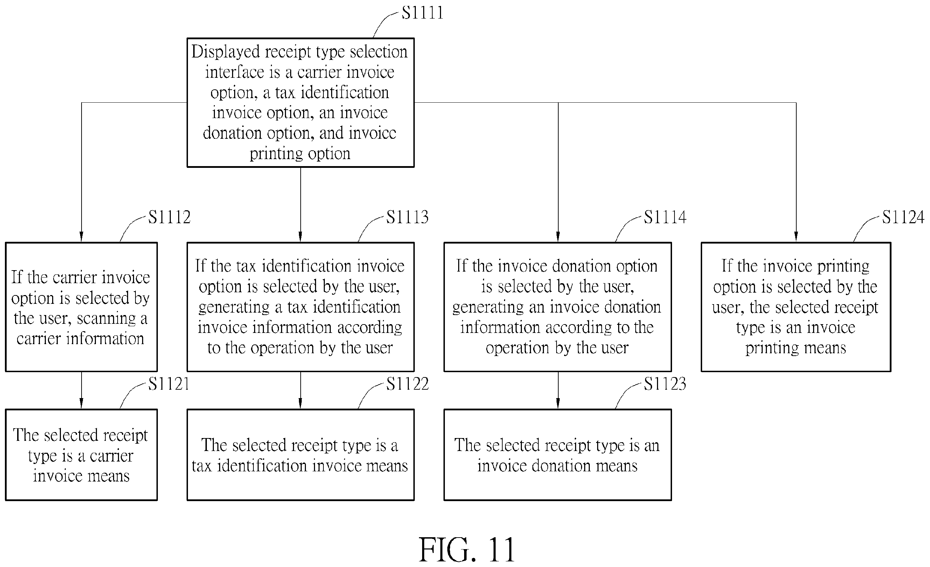

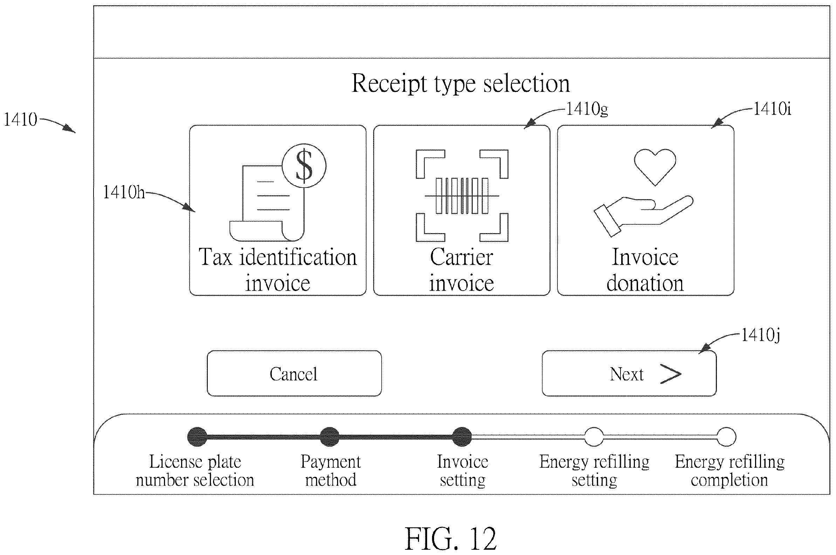

As shown in FIG. 11 and FIG. 12, an energy refilling device 14 of a system for self-service energy refilling 1 of the present disclosure is configured to further execute the following steps:
Step 1111 (S1111): The receipt type selection interface displayed by the second display unit 141 includes a carrier invoice option 1410g, a tax identification invoice option 1410h, an invoice donation option 1410i, and invoice printing option 1410j.
Step 1112 (S1112): If the carrier invoice option 1410g is selected, the third processing unit 140 controls the second display unit 141 to display a scanned carrier information.
Step 1121 (S1121): The third processing unit 140 determines the selected receipt type generated by the second display unit 141 to set as a carrier invoice means.
Step 1113 (S1113): If the tax identification invoice option 1410h is selected, the third processing unit 140 controls the second display unit 141 to display a tax identification invoice information.
Step 1122 (S1122): The third processing unit 140 determines the selected receipt type generated by the second display unit 141 to set as tax identification invoice means.
Step 1114 (S1114): If the invoice donation option 1410i is selected, the third processing unit 140 controls the second display unit 141 to display invoice donation information.
Step 1123 (S1123): The third processing unit 140 determines the selected receipt type generated by the second display unit 141 to set as an invoice donation means.
Step 1124 (S1124): If the invoice printing option 1410j is selected, the third processing unit 140 determines the selected receipt type generated by the second display unit 141 to set as an invoice printing means.

Those skilled in the art will readily observe that numerous modifications and alterations of the system may be made while retaining the teachings of the invention. Accordingly, the above disclosure should be construed as limited only by the metes and bounds of the appended claims.

## Claims

1. A system for self-service energy refilling (1), comprising:
an image recognition device (10) disposed at a driveway of an energy station, and configured to acquire and transmit a vehicle entrance information of a vehicle parked in the driveway;
a mobile device (11) comprising an application configured to process and transmit a transaction information;
a terminal computer device (13), configured to receive the vehicle entrance information from the image recognition device (10) and transmit the vehicle entrance information;
a cloud server device (12), configured to:
receive the transaction information from the mobile device (11) and the vehicle entrance information from the terminal computer device (13);
validate the mobile device (11) and the vehicle according to the transaction information and the vehicle entrance information to generate an energy refilling instruction; and
transmit the energy refilling instruction; and
an energy refilling device (14), comprising an energy refilling nozzle (142) and configured to receive the energy refilling instruction from the cloud server device (12) or the vehicle entrance information from the image recognition device (10) to unlock the energy refilling nozzle (142).

2. The system of claim 1, wherein the energy refilling device (14) further comprises:
a second display unit (141); and
a third processing unit (140), coupled to the cloud server device (12), the image recognition device (10), the second display unit (141), and the energy refilling nozzle (142), and configured to:
unlock the energy refilling nozzle (142) if receipt of the energy refilling instruction from the cloud server device (12) is confirmed; and
execute the following steps if receipt of the energy refilling instruction from the cloud server device (12) is failed:
if the vehicle entrance information is received from the image recognition device (10),
recognizing a user license plate number according to the vehicle entrance information, establishing a license plate selection list according to the user license plate number, controlling the second display unit (141) to display the license plate selection list, and determining if a license plate self-input option of the license plate selection list is selected;
if the license plate self-input option is selected,
receiving a manual input license plate number generated by the second display unit (141), and determining if the manual input license plate number pertains to a membership;
if the license plate self-input option is not selected,
receiving a selected license plate number generated by the second display unit (141), and determining if the selected license plate number pertains to a membership;
if the manual input license plate number or the selected license plate number pertains to a membership,
controlling the second display unit (141) display a password input interface, receiving a user password generated by the second display unit (141), and determining correctness of the user password according to the manual input license plate number or the selected license plate number;
if the user password is correct,
controlling the second display unit (141) to display a payment method selection interface, receiving a selected payment method generated by the second display unit (141), controlling the second display unit (141) to display a receipt type selection interface, receiving a selected receipt type generated by the second display unit (141), controlling the second display unit (141) to display an energy refilling means selection interface, receiving a selected energy refilling means generated by the second display unit (141), controlling the second display unit (141) to display the energy refilling means selection interface, receiving the energy refilling means generated by the second display unit (141), controlling the energy refilling nozzle (142) to provide energy according to the selected energy refilling means, and determining if refilling of the energy is completed; and
if refilling of the energy is completed,
performing payment according to the selected payment method, and generating a receipt according to the selected receipt type.

3. The system of claim 2, wherein the third processing unit (140) is further configured to execute the following steps:
if the manual input license plate number or the selected license plate number pertains to the membership,
determining if the manual input license plate number or the selected license plate number pertains to a corporate membership;
if the manual input license plate number or the selected license plate number pertains to the corporate membership,
controlling the second display unit (141) to display the password input interface, receiving the user password generated by the second display unit (141), and determining the correctness of the user password according to the manual input license plate number or the selected license plate number;
if the manual input license plate number or the selected license plate number pertains to the corporate membership and the user password is correct,
controlling the second display unit (141) to display the energy refilling means selection interface, receiving the selected energy refilling means generated by the second display unit (141), controlling the energy refilling nozzle (142) to provide the energy according to the selected energy refilling means, determining if refilling of the energy is completed, and controlling the second display unit (141) to display a transaction receipt when refilling of the energy is completed.

4. The system of claim 2, wherein the third processing unit (140) is further configured to execute the following steps:
if the manual input license plate number or the selected license plate number does not pertain to the membership,
controlling the second display unit (141) to display the payment method selection interface, receiving the selected payment method generated by the second display unit (141), controlling the second display unit (141) to display the receipt type selection interface, receiving the selected receipt type generated by the second display unit (141), control the second display unit (141) to display the energy refilling means selection interface, receiving the selected energy refilling means generated by the second display unit (141), controlling the energy refilling nozzle (142) to provide the energy according to the selected energy refilling means, determining if refilling of the energy is completed, performing the payment according to the selected payment method when refilling of the energy is completed, and generating the receipt according to the selected receipt type.

5. The system of claim 2, wherein
the energy refilling means selection interface comprises an energy quick refilling option (1410a), a total energy refilling volume setting option (1410b), and a total energy refilling amount setting option (1410c); and
the third processing unit (140) is further configured to execute the following steps:
if the energy quick refilling option (1410a) is selected,
determining the selected energy refilling means to set as an energy quick refilling means, controlling the energy refilling nozzle (142) to provide the energy according to the energy quick refilling option (1410a), and determining if refilling of the energy is completed;
if the total energy refilling volume setting option (1410b) is selected,
determining the selected energy refilling means to set as a predetermined volume energy refilling means, controlling the energy refilling nozzle (142) to provide the energy to a predetermined volume according to the total energy refilling volume setting option (1410b), and determining if refilling of the energy is completed;
if the total energy refilling amount setting option (1410c) is selected,
determining the selected energy refilling means to set as a predetermined amount energy refilling means, controlling the energy refilling nozzle (142) to provide the energy to a predetermined amount according to the total energy refilling amount setting option (1410c), and determining if refilling of the energy is completed.

6. The system of claim 2, wherein,
the payment method selection interface comprises a deposit payment option (1410d), a card payment option (1410e), and a contactless payment option (1410f); and
the third processing unit (140) is further configured to execute the following steps:
if the deposit payment option (1410d ) is selected,
determining if a membership deposit balance corresponding to the manual input license plate number or the selected license plate number is higher than a lowest balance, and determining the selected payment method to set as a deposit payment method if the membership deposit balance is higher than the lowest balance;
if the card payment option (1410e) is selected,
determining if a card balance is higher than the lowest balance, and determining the selected payment method to set as a card payment method if the card balance is higher than the lowest balance;
if the contactless payment option (1410f) is selected,
receiving a payment information via the second display unit (141), applying for a payment authorization according to the payment information, and determining the selected payment method to set as a contactless payment method.

7. The system of claim 2, wherein
the receipt type selection interface comprises a carrier invoice option (1410g), a tax identification invoice option (1410h), an invoice donation option (1410i), and an invoice printing option (1410j); and
the third processing unit (140) is further configured to execute the following steps:
if the carrier invoice option (1410g ) is selected,
controlling the second display unit (141) to display a scanned carrier information, and determining the selected receipt type to set as a carrier invoice means;
if the tax identification invoice option (1410h ) is selected,
controlling the second display unit (141) to display a tax identification invoice information, and determining the selected receipt type to set as a tax identification invoice means;
if the invoice donation option (1410i) is selected,
controlling the second display unit (141) to display a invoice donation information,
and determining the selected receipt type to set as an invoice donation means; and if the invoice printing option (1410j) is selected,
determining the selected receipt type to set as an invoice printing means.

8. The system of claim 1, wherein the image recognition device (10) comprises:
an image information acquisition unit (101), configured to acquire the vehicle entrance information;
an image information recognition unit (102), configured to recognize the vehicle entrance information from the image information acquisition unit (101) to act as a portion of an energy refilling procedure information; and
a first connection unit (103), configured to provide an internet connection and transmit the vehicle entrance information from the image information recognition unit (102).

9. The system of claim 8, wherein the vehicle entrance information comprises the user license plate number, a station name of the energy station, a driveway number of the driveway, and/or an entrance time of the vehicle.

10. The system of claim 1, wherein the mobile device (11) further comprises:
a first processing unit (110), configured to acquire or generate the transaction information to act as portion of an energy refill procedure information;
a first information encrypt/decrypt unit (111), configured to perform an encryption or a decryption of the transaction information;
a second connection unit (112), configured to provide internet connection to perform transmission of the transaction information; and
a first display unit (113), configured to display the transaction information.

11. The system of claim 10, wherein the transaction information comprises a user information, a desired energy type of the energy, the selected payment method, and/or the selected receipt type.

12. The system of claim 1, wherein the terminal computer device (13) comprises:
a second processing unit (130), configured to receive the vehicle entrance information from the image recognition device (10); and
a fourth connection unit (131), configured to provide internet connection to perform transmission of the vehicle entrance information.

13. The system of claim 1, wherein the cloud server device (12) comprises:
an information acquisition unit (120), configured to acquire the transaction information from the mobile device (11) and the vehicle entrance information from the terminal computer device (13), and transmit the transaction information and the vehicle entrance information;
a validation unit (121), configured to perform validation on the mobile device (11) and the vehicle using the transaction information and the vehicle entrance information, and generate the energy refilling instruction; and
a second information encrypt/decrypt unit (122), configured to perform an encryption or a decryption of the transaction information or the energy refilling instruction; and
a third connection unit (123), configured to provide internet connection to perform transmission of the energy refilling instruction.

14. The system of claim 13, wherein
the cloud server device (12) further comprises a database configured to store the energy refilling procedure information, and
the energy refilling procedure information is stored in a hash table to enable validation of the mobile device (11) and the vehicle.

15. The system of claim 2, wherein the third processing unit (140) of the energy refilling device (14) is further configured to:
receive the energy refilling instruction from the cloud server device (12);
unlock the energy refilling nozzle (142); and
control the second display unit (141) to display the energy refilling instruction.
